# EUROPEAN PATENT SPECIFICATION

(11) **EP 3 938 664 B1**
(45) Date of publication and mention of the grant of the patent: **03.01.2024**
(21) Application number: 20713374.5
(22) Date of filing: 04.03.2020
(51) Int. Cl.: F16B 12/20

(54) **JOINING DEVICE FOR FURNITURE PANELS**
VERBINDUNGSVORRICHTUNG FÜR MÖBELPANEELE
DISPOSITIF D'ASSEMBLAGE POUR PANNEAUX DE MEUBLE

(30) Priority: 13.03.2019 IT 201900003629
(43) Date of publication of application: 19.01.2022
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Franco Martegani S.r.l.
(86) International application number: PCT/IB2020/051856
(87) International publication number: WO 2020/183297

(56) References cited:
- EP-A1- 1 798 424
- WO-A1-2015/158622

## Description

The present invention relates to a rapid joining device between two panels of furniture or other furnishing items, in particular between a shoulder and a shelf.

In the field of furniture and other furnishing items in general that use panels, various types of joining and blocking systems between two panels that must be stably connected, for example between a shoulder and a shelf, are known. In this description, the generic term "shelf" means above all a base or a top, as well as any intermediate shelf of a piece of furniture.

In general, the positioning of joints in panels is easy as a protruding pin is provided in a first panel (for example a shoulder) and elements for receiving and blocking the pin in a second panel (for example a base or shelf), both arranged in relative holes of the two panels. Such joining devices are known for example from WO 2015/158622 A1 and EP 1 798 424 A1.

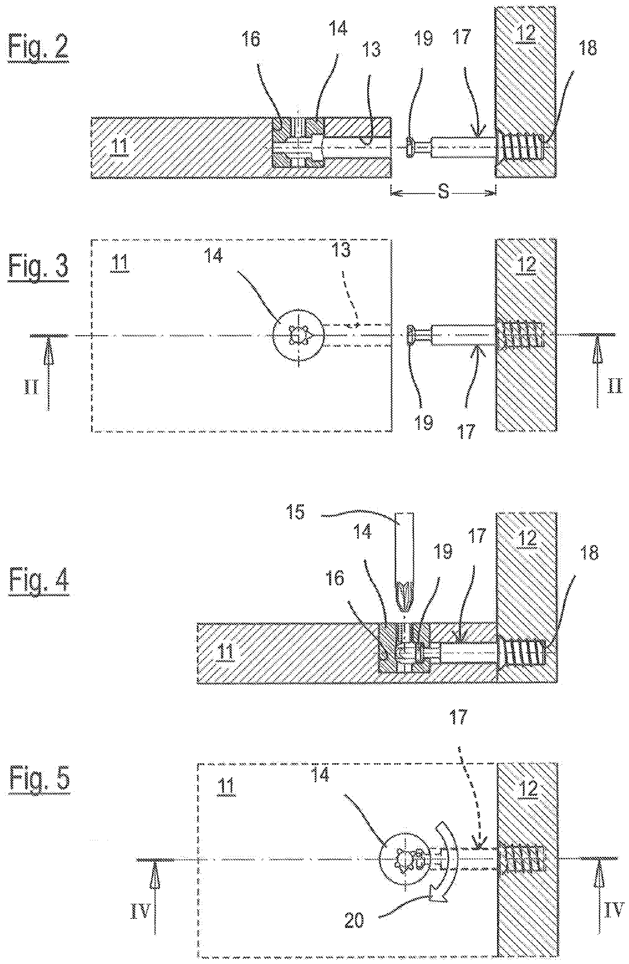

Figures 2, 3, 4 and 5 show a typical example of a joint in which a first panel 11, such as a horizontal base or shelf i.e. parallel to the floor or walking surface, must be connected to a second panel 12, such as a vertical shoulder i.e. perpendicular with respect to both the floor P and the first panel 11. The first panel 11 has at one end of its first horizontal blind holes 13, an eccentric joint 14 which can be actuated with a screwdriver 15. The eccentric joint 14 is arranged in the panel 11 in a second vertical blind hole thereof 16 perpendicular to the first hole 13 to cross the first hole 13. A pin 17, on the other hand, is arranged in the second panel or shoulder 12, in a bush or simply screwed into a hole 18 horizontal with respect to the floor. The pin 17 protrudes from the second panel 12 so that it can be inserted and fitted into the hole 13 of the first panel 11 and reach the eccentric joint 14 with an end head 19 thereof. Figures 2 and 3 show a sectional and plan view of the extracted or exploded position of the parts with the shoulder 12 and base 11 detached before being connected to each other. Figures 4 and 5 on the other hand show the two panels 11, 12 adjacent to each other, with the pin 17 inserted in the hole 13 of the shelf 11 and blocked by means of the eccentric joint 14 rotated according to the arrow 20 by means of the screwdriver 15.

Above all from figures 2 and 3 it can be seen that in order to be able to be brought closer and coupled, the two panels 11, 12 must be kept at a certain distance S, at least equal to that of the part T of the pin 17 protruding from the shoulder 12 so as to allow their insertion in the hole 13.

The blocking actuation of these joints is then effected in a wide variety of ways and with the most diverse devices, well known to persons skilled in the art.

This arrangement does not have any particular problems given the variety of solutions available when the connection between the panels takes place in an open space that is easily accessible and in which the two panels to be joined and coupled can be easily moved together.

Furthermore, in some of these applications, the parts of furniture or furnishing item, i.e. the above-mentioned panels, can or must be positioned in extremely narrow spaces, in particular in width, with difficulty for the approaching operations between the same before tightening and blocking the joint, for example between the shoulders and shelves or bases.

A particular condition is that in which the furniture must be arranged in a recess with an extremely limited free space between the shoulders 12 and the side walls V parallel to said shoulders 12.

The joining example of the figures described above causes a serious problem when the panels must be mounted in a recess that is extremely limited in its width, as it is not possible to drag the assembled furniture or connected panels 11, 12 outside the recess as they must be assembled inside the same.

For these specific cases, solutions with a relatively suitable functioning have been studied and used but that involve both problems of difficult assembly and also problems relating to a particular construction complication of the joint which make them expensive on the one hand, and on the other delicate and not always satisfactorily functional due to their difficult access.

The general objective of the present invention is therefore to provide a joining device between two panels of furniture or other furnishing items, in particular between a shoulder and a shelf, capable of solving the above-mentioned drawbacks of the prior art in a simple, economic and functional manner.

A further objective of the present invention is to provide a joining device between two panels that has a minimum encumbrance, at the same time being quite easily accessible from extremely minimal spaces between the shoulder panels of the furniture or furnishing item and the side walls of the recess in which it must be arranged and assembled.

Another objective of the present invention is to provide a joining device that can be used both between the shoulder and the base or shelf, and between the shoulder and the top and that can be used in any type of connection between two panels of a piece of furniture or furnishing item.

Yet another objective of the present invention is to provide a joining device which allows immediate and automatic positioning and blocking.

The above objectives are achieved by a joining device for panels of furniture or other furnishing items produced according to independent claim 1 and the following sub-claims.

The structural and functional characteristics of the present invention and its advantages with respect to the known art will appear even more evident from the following description, referring to the attached schematic drawings, which show embodiment examples of the invention itself, all having the same innovative concept. In the drawings:
- figure 1 is a plan view from above of an environment in which a piece of furniture is provided with joining devices according to the prior art;
- figures 2 and 3 are a sectional view and a plan view showing a joining device of those used in the furniture of figure 1 with parts exploded with respect to the panels in which they are applied for their stable connection;
- figures 4 and 5 are a sectional view and a plan view showing the joining device shown in figures 2 and 3 when tightened to firmly connect the panels;
- figure 6 is a plan view from above of an environment where a piece of furniture equipped with a joining device according to the present invention is arranged;
- figures 7 and 8 are a sectional view and a plan view showing a joining device according to the present invention in a first embodiment with parts inserted in panels of a piece of furniture as shown in figure 6 with panels exploded before their stable connection;
- figures 7b and 8b are views similar to those of figures 7 and 8 with the parts of the joining device according to the present invention partially coupled with each other in a first assembly step in which the coupling between the parts is effected;
- figures 7c and 8c are views similar to those of figures 7 and 8 with the parts of the joining device according to the present invention tightened together once the assembly with the tightening of the joining device has been completed;
- figures 9 and 10 show a perspective view of the parts of the joining device shown in figures 7 and 8 exploded together and the sectional elements of figure 7 respectively in an exploded perspective view;
- figure 11 is a plan view showing the possible relative translation directions between the two panels provided with the joining device of the present invention.

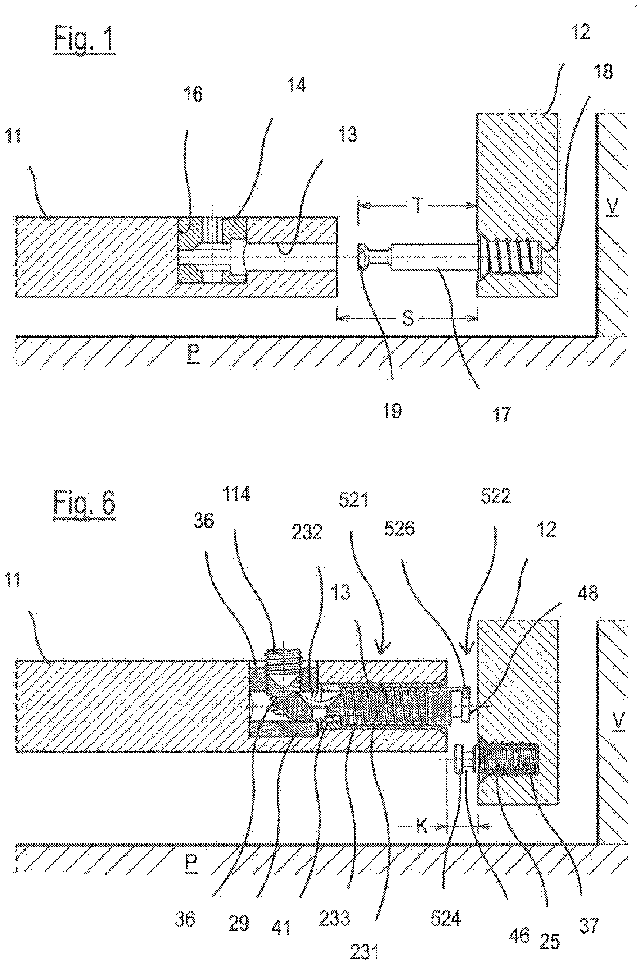

With reference in general to figures 6 to 11, a joining device is shown between two panels of furniture or other furnishing items, in particular between a shoulder and a shelf, according to the present invention.

Figure 6, for example, shows an end part of a recess of an environment in which a piece of furniture is arranged, partially shown therein through its base 11 or first panel and its shoulder 12 or second panel, which must be connected and firmly blocked.

In order to do this and have a distance K much shorter than that S of the state of the art, between the two panels 11, 12 before being coupled, a joining device according to the present invention is installed on the two panels 11, 12.

On examining figures 6 to 11, for example, in which a first embodiment of a joining device according to the present invention is shown, the following can be observed.

In the joining device between two panels 11, 12 of furniture or other furnishing items, it can be noted that the two panels 11, 12 are positioned perpendicular to each other, i.e. the base 11 horizontally and the shoulder 12 in vertical with respect to an underlying floor P.

As for the example of the state of the art, a first horizontal blind hole 13 is obtained on one side in the base 11 or first panel, which crosses with a vertical hole 16 and at the internal end of both holes 13, 16, a connection and blocking system is provided comprising for example a grub screw or headless screw joint 114 positioned in a barrel 29 which can be actuated with a screwdriver 15. In the second panel or shoulder 12, on the other hand, there is a blind hole 18 horizontal with respect to the floor P, directed according to a direction coinciding with or parallel to an axis X of the first horizontal blind hole 13 of the first panel 11 or base 11 of the furniture.

Also according to the present invention, the joining device is of the type that a pin or plug extends from a first panel 11 and is inserted in a complementary seat of a second panel 12, and the above-mentioned stable connection and blocking system of said pin or plug is provided inside said seat, wherein, in the non-limiting example shown, said system comprises the above-mentioned grub screw or headless screw 114 and the barrel 29.

With the joining device assembled and operative, an edge B of the first panel 11 is stably abutted against a surface C of the second panel 12 to obtain the stable coupling between said panels.

The joining device of the present invention is characterized in that said pin or plug is divided into two sections 521, 522, a first section 521 provided on the first panel 11 and a second section 522 provided on the second panel 12. As will be seen, said sections 521, 522 can be releasably intercoupled on a plane parallel to one of said panels 11 or 12, in order to allow not only their assembly but also disassembly.

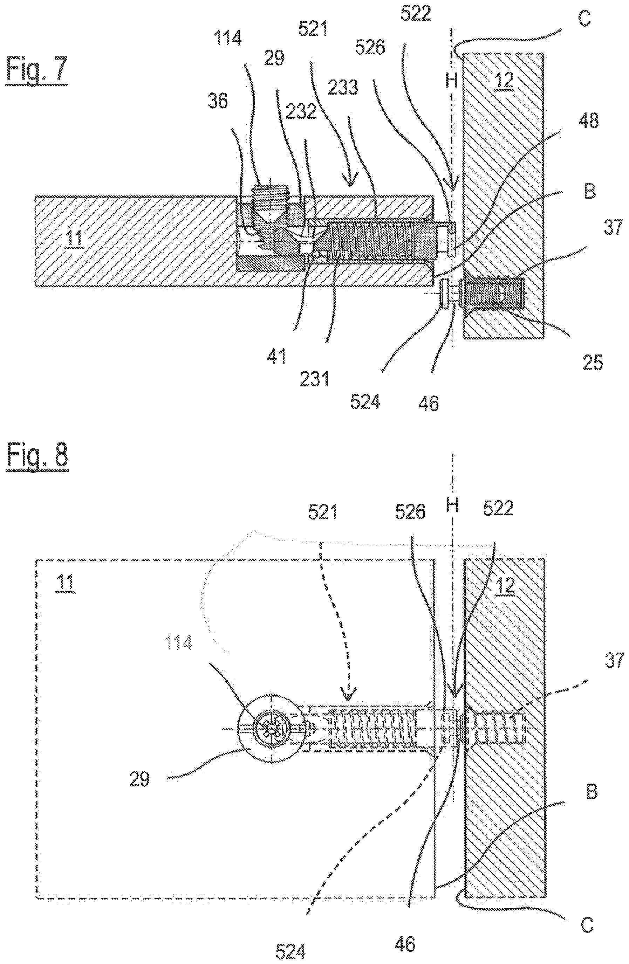

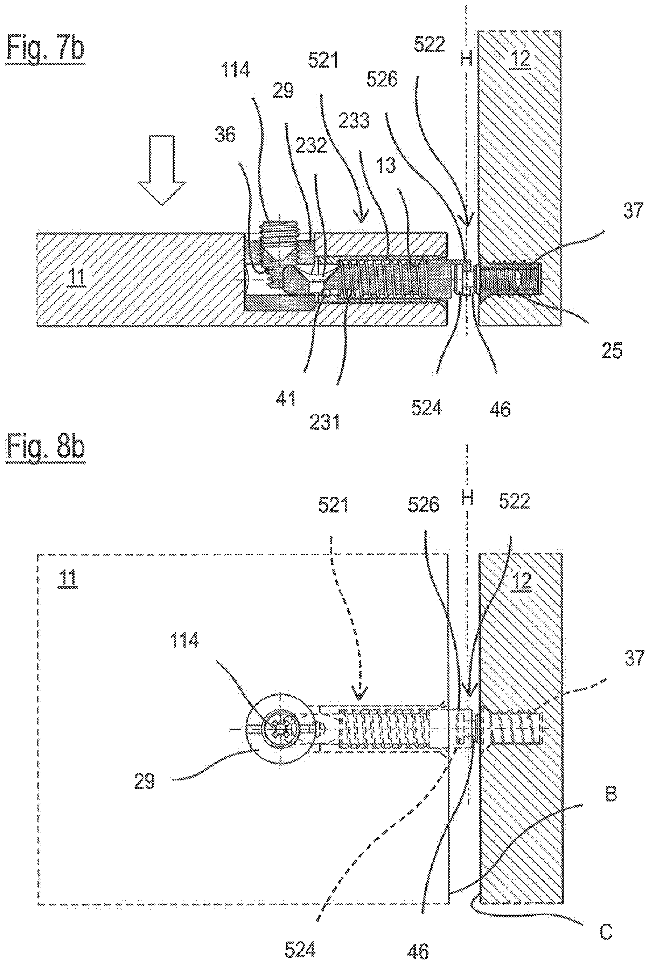

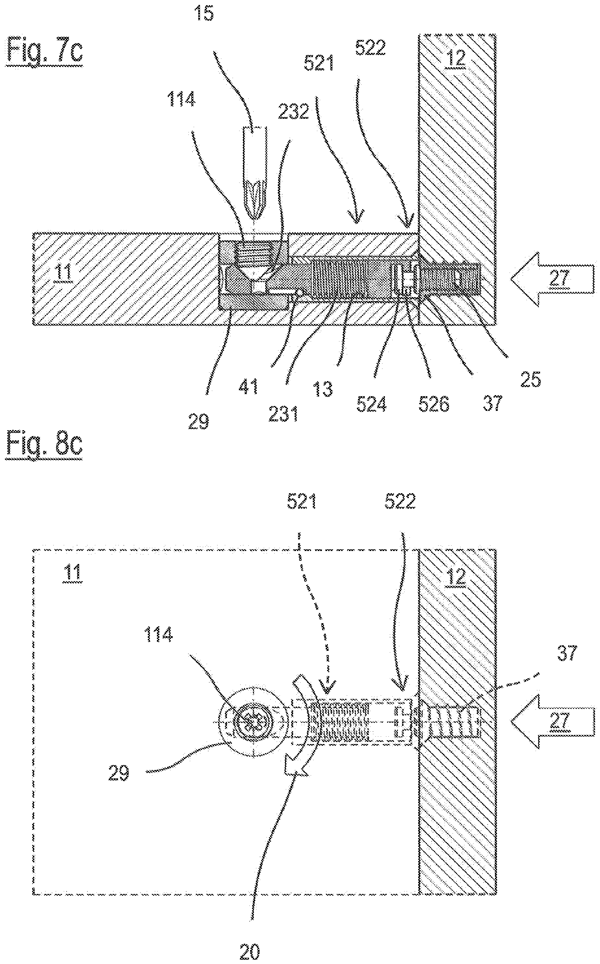

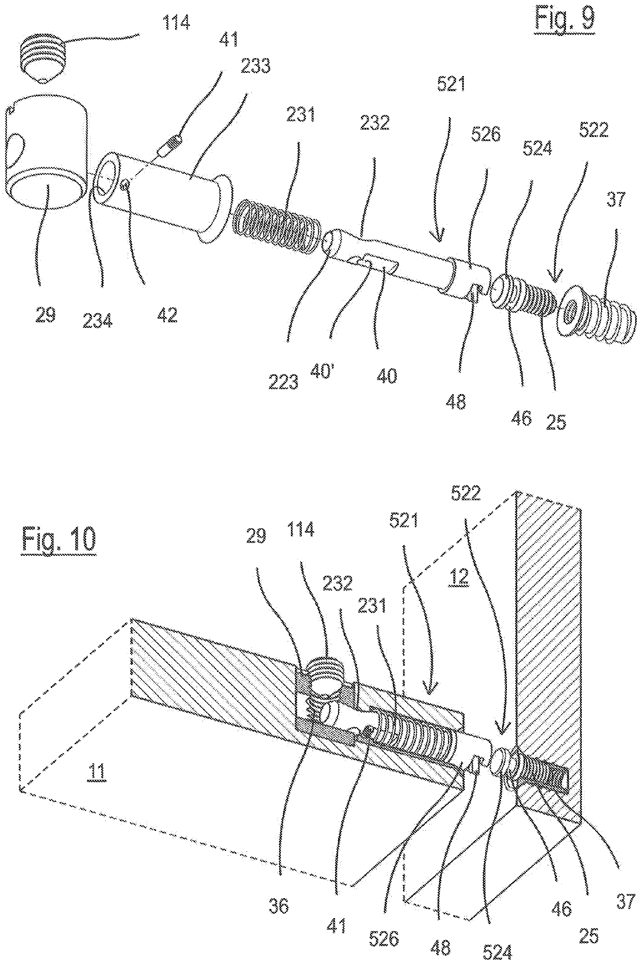

Figures 7 and 9 in particular show how in this first embodiment of a joining device according to the invention, the first section 521 of the pin consists of a female part inserted at least partially in the first horizontal blind hole 13 of the first panel or base 11. Likewise, the second section 522 of the pin consists of a male part which is inserted at least partially in the blind hole 18 formed in the second panel or shoulder 12, aligned with the first hole 13 of the first panel or base 11.

In particular, the figures show how the first section 521 of the pin comprises a cylindrical element or body which extends into the hole 13 and provides at a first end, a flared housing 232 suitable for receiving the tip of the grub screw 114 so that the tip of the grub screw 114 fits into said housing 232 and blocks said grub screw joint 114-barrel 29.

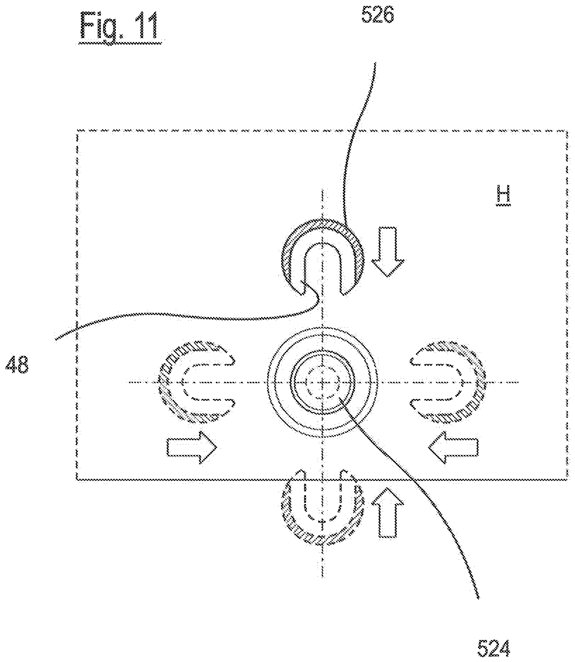

At a second end of the first section 521 of the pin, a coupling extension 526 is provided, for example with a hollowed U-shaped end 48, which forms the female end part. Furthermore, the second section 522 of the pin comprises a body or threaded stem 25, which is screwed into the second panel or shoulder 12, from which an enlarged protruding element extends, such as a circular disk element 524 which forms the male part, protruding from the shoulder 12 and suitable for being inserted into the coupling extension 526. The coupling extension 526 is associated with the enlarged element 524 with a simple relative translation between the parts according to one of the directions shown in figure 11 so as to be reciprocally engaged with each other. More specifically, an annular recess 46 is provided at the rear of the coupling extension 526 towards the second panel 12, protruding from the shoulder 12 and suitable for receiving the hollowed U-shaped end 48 of the coupling extension 526.

Figure 6 shows how the joining device of the invention allows the two panels 11, 12 to be kept at a minimum distance K from each other which is just sufficient for allowing the assembly of the device itself in an operative position. The various components of the device are arranged as indicated above.

From this position (figures 7 and 8), the panels 11, 12 are brought together according to one of the translation directions indicated in figure 11 on a plane H parallel to the second panel 12 and perpendicular to the first panel 11. In this way it can be noted that the sections 521 and 522 can be coupled together on said translation plane H.

It can also be observed that the first hole 13 of the first horizontal panel or base 11 has a larger diameter than that of the first cylindrical section 521 as it also receives a bush 233. The bush 233 has, at one end facing the inside of the hole 13 of the panel, a hole 234 having a smaller diameter than the remaining part, creating an undercut 38. A contrast spring 231, positioned coaxially with respect to the cylindrical body or element of the first section 521 of the pin, is abutted between said undercut 38 and an annular projection 39, formed before the coupling extension 526, which in turn at least partially protrudes outwards. The spring 231 serves to keep the coupling extension 526 in such a position that it is able to be coupled with the enlarged male element 524 present on the second panel 522.

The bush 233 therefore contains in its interior both part of the first cylindrical section 521 of the pin and the spring 231.

In particular, figures 9 and 10 show how the cylindrical element or body of the first section 521 of the pin provides, on a portion of its side surface, a milled plane 40 with an anti-rotation function. This milled plane 40, in fact, houses a small plug 41 which is inserted in a side hole 42 of the bush 233. It can also be noted how the milled plane 40, in one of its ends 40' facing the grub screw or headless screw 114 of the stable connection and blocking system of the sections 521, 522 of the pin, also defines a stop of the first section 521 of the pin, in rest position.

The small plug 41 and the milled plane 40 are arranged to prevent the rotation of the first section 521 of the pin and leave the grub screw 114 oriented and aligned with the respective flared housing 232 formed in the same section 521 of the pin.

In short, from the position of figures 7 and 8, the panels 11, 12 are moved on planes parallel to the plane H parallel to the second panel 12 and perpendicular to the first panel 11 so as to bring the hollowed U-shaped end 48 of the coupling extension 526 into engagement on the enlarged element 524, for example in the form of a circular disk, which is positioned in the annular recess 46.

In this way the position shown in figures 7b and 8b is achieved wherein the first section 521 of the pin is engaged with the second section 522 of the pin.

This coupling step is followed by a tightening step of the joining device wherein, by acting according to the arrow 27, the coupling extension 526 engaged on the enlarged circular disk element 524 enters the initial section of the bush 233. The bush 233 thus causes and guarantees the tightening between the coupling extension 526 and the enlarged circular disk element 524.

This coupling step and insertion of one part into the other, also causes the positioning of the flared housing 232 of the first section 521 of the pin aligned beneath the threaded seat 36 formed in the barrel 29, thanks to the fact that the contrast spring 231 is packed.

At this point, the screwdriver 15, acting on the grub screw 114 causes its rotation according to the arrow 20 so as to bring its tip to be positioned within the annular housing 232 of the first section 521 of the pin (figures 7c and 8c).

The actuation of the grub screw 114 pulls the sections 521, 522 of the pin thus coupled, tightening and firmly blocking them due to the fact that the coupling extension 526 cannot be released from the enlarged element 524 as it is unable to become disengaged in a direction parallel to the plane H.

The joining device thus acts to firmly abut the edge B of the first panel 11 against the surface C of the second panel 12 creating a stable coupling between the panels 11, 12 (figures 7c and 8c).

It is evident that the sections 521, 522 of the pin can have inverted parts with respect to what is illustrated. The one section 522 therefore provides one end with a coupling extension 526 and the other section 521 an end provided with an enlarged protruding element 524 or the like by suitably modifying the elements and parts that collaborate with the same. This arrangement, not shown, simply represents a technical equivalent.

From what is described and illustrated above, it can be seen that a joining device according to the invention perfectly achieves the objectives indicated.

It can also be noted how a joining device according to the invention is such as to allow the immediate and automatic positioning and blockage between the parts in which it is inserted.

It should also be pointed out that a device of this kind functions perfectly also for normal applications that do not require limited positioning and assembly spaces between the parts.

It is thus evident that a device according to the invention is extremely simple and functional.

Furthermore, this device is suitable for front actuation and can be positioned in extremely small spaces between the furniture and the floor or ceiling and the side walls of a recess. The arrangement of suitable actuation and motion transmission rods, in fact, allows the device to be activated both in a front and rear position of the furniture.

The forms and structure for the production of a joining device according to the present invention, as also the materials and assembly modes, can naturally differ from those shown by way of non-limiting example in the drawings.

The objectives mentioned in the preamble of the description have thus been achieved.

The protection scope of the present invention is defined by the enclosed claims.

## Claims

1. A joining device for joining two panels of furniture or other furnishing items, one first panel (11) positioned perpendicular to the other second panel (12), with an edge (B) of the first panel (11) that can be firmly abutted against a surface (C) of the second panel (12), said device comprising a pin configured to be extendable from the second panel (12) and configured to be inserted in a complementary seat of the first panel (11), the device further comprising a stable connection and blocking system (114) of said pin being provided inside said seat, said pin is divided into two sections (521,522), a first section that can be provided on the first panel (11) and a second section that can be provided on the second panel (12), said first section (521) which can be arranged on said first panel (11) has a cylindrical element comprising a housing (232), said connection and blocking system (114) comprising a grub screw or headless screw (114) interacting with said housing (232) formed in said cylindrical element of said first section (521), wherein the second section (522) of the pin comprises a threaded stem (25), which is to be screwed into the second panel (12), and the first and second sections (521, 522) of the pin being releasably intercoupled with each other on a plane parallel to said second panel (12), said first section (521) comprises a female part configured to be provided in said first panel (11) and said second section (522) comprises a male part configured to be provided on said second panel (12) and suitable for being intercoupled, said female part of said first section (521) providing a coupling extension (526) and said male part of said second section (522) providing an enlarged element (524) suitable for being engaged in said coupling extension (526) and extending from the threaded stem (25) for remaining protruding from the second panel (12) and to be inserted into the coupling extension (526).

2. The joining device according to claim 1, **characterized in that** comprises a socket (233) insertable in said first panel (11) and containing the first section of the pin or plug, said coupling extension (526), inserted on said enlarged element (524) which is extendable from a second panel (12), is inserted in the socket (233).

3. The joining device according to one or more of the previous claims, **characterized in that** a contrast spring (231) is associated with said cylindrical element of said first section (521) arrangeable on said first panel (11).

4. The joining device according to claim 2, **characterized in that** said cylindrical element has , on a portion of its side surface, a milled plane (40) with an anti-rotation function, said milled plane (40) housing a plug (41) which is inserted in a side hole (42) of the socket (233) housing said first section (521) .

5. The joining device according to claim 4, **characterized in that** a contrast spring (231) is arranged coaxially with respect to said cylindrical element of said first section (521).

## Patentansprüche

1. Verbindungsvorrichtung zum Verbinden von zwei Platten von Möbeln oder anderen Einrichtungsgegenständen, wobei eine erste Platte (11) senkrecht zu der anderen zweiten Platte (12) positioniert ist, wobei ein Rand (B) der ersten Platte (11) fest gegen eine Oberfläche (C) der zweiten Platte (12) anliegen kann, wobei die Vorrichtung einen Stift umfasst, der so konfiguriert ist, dass er aus der zweiten Platte (12) ausfahrbar ist, und so konfiguriert ist, dass er in einen komplementären Sitz der ersten Platte (11) eingesetzt werden kann, wobei die Vorrichtung ferner ein stabiles Verbindungs- und Blockiersystem (114) des Stifts umfasst, das innerhalb des Sitzes vorgesehen ist, wobei der Stift in zwei Abschnitte (521, 522) unterteilt ist, einen ersten Abschnitt, der an der ersten Platte (11) vorgesehen sein kann, und einen zweiten Abschnitt, der an der zweiten Platte (12) vorgesehen sein kann, wobei der erste Abschnitt (521), der an der ersten Platte (11) angeordnet werden kann, ein zylindrisches Element aufweist, das ein Gehäuse (232) umfasst, wobei das Verbindungs- und Blockiersystem (114) eine Madenschraube oder einen Gewindestift (114) umfasst, die/der mit dem Gehäuse (232) zusammenwirkt, das in dem zylindrischen Element des ersten Abschnitts (521) ausgebildet ist, wobei der zweite Abschnitt (522) des Stifts einen Gewindeschaft (25) umfasst, der in die zweite Platte (12) einzuschrauben ist, und wobei der erste und der zweite Abschnitt (521, 522) des Stifts auf einer Ebene parallel zu der zweiten Platte (12) lösbar miteinander gekoppelt sind, wobei der erste Abschnitt (521) ein Buchsenteil umfasst, das so konfiguriert ist, dass es in der ersten Platte (11) vorgesehen ist, und der zweite Abschnitt (522) ein Steckteil umfasst, das so konfiguriert ist, dass es auf der zweiten Platte (12) vorgesehen ist, und die zur Kopplung miteinander geeignet sind, wobei der Buchsenteil des ersten Abschnitts (521) eine Kopplungsverlängerung (526) bereitstellt und der Steckteil des zweiten Abschnitts (522) ein vergrößertes Element (524) bereitstellt, das geeignet ist, in die Kopplungsverlängerung (526) einzugreifen und sich von dem Gewindeschaft (25) aus zu erstrecken, um von der zweiten Platte (12) vorstehend zu bleiben und in die Kopplungsverlängerung (526) eingesetzt zu werden.

2. Verbindungsvorrichtung nach Anspruch 1, **dadurch gekennzeichnet, dass** sie einen Sockel (233) umfasst, der in die erste Platte (11) eingesetzt werden kann und den ersten Abschnitt des Stifts oder Stopfens enthält, wobei die Kopplungsverlängerung (526), die in das vergrößerte Element (524) eingesetzt ist, das aus einer zweiten Platte (12) ausgefahren werden kann, in die Buchse (233) eingesetzt ist.

3. Verbindungsvorrichtung nach einem der vorhergehenden Ansprüche,
**dadurch gekennzeichnet, dass** dem zylindrischen Element des ersten Abschnitts (521), das an der ersten Platte (11) angeordnet werden kann, eine Gegenfeder (231) zugeordnet ist.

4. Verbindungsvorrichtung nach Anspruch 2, **dadurch gekennzeichnet, dass** das zylindrische Element auf einem Teil seiner Seitenfläche eine gefräste Ebene (40) mit einer Anti-Rotationsfunktion aufweist, wobei die gefräste Ebene (40) einen Stopfen (41) aufnimmt, der in ein Seitenloch (42) des den ersten Abschnitt (521) aufnehmenden Sockels (233) eingesetzt ist.

5. Verbindungsvorrichtung nach Anspruch 4, **dadurch gekennzeichnet, dass** eine Gegenfeder (231) koaxial zu dem zylindrischen Element des ersten Abschnitts (521) angeordnet ist.

## Revendications

1. Dispositif d'assemblage pour assembler deux panneaux de meubles ou d'autres articles d'ameublement, un premier panneau (11) positionné perpendiculairement à l'autre second panneau (12), avec un bord (B) du premier panneau (11) qui peut venir fermement en butée contre une surface (C) du second panneau (12), ledit dispositif comprenant un pion configuré pour être extensible à partir du second panneau (12) et configuré pour être insérée dans un siège complémentaire du premier panneau (11), le dispositif comprenant en outre un système de connexion et de blocage stable (114) dudit pion étant prévu à l'intérieur dudit siège, ledit pion est divisé en deux sections (521, 522), une première section qui peut être prévue sur le premier panneau (11) et une seconde section qui peut être prévue sur le second panneau (12), ladite première section (521) qui peut être disposée sur ledit premier panneau (11) comporte un élément cylindrique comprenant un boîtier (232), ledit système de connexion et de blocage (114) comprenant une vis d'arrêt ou vis sans tête (114) interagissant avec ledit boîtier (232) formé dans ledit élément cylindrique de ladite première section (521),
dans lequel la seconde section (522) du pion comprend une tige filetée (25), qui doit être vissée dans le second panneau (12), et les première et seconde sections (521, 522) du pion étant intercouplées de manière amovible l'une à l'autre sur un plan parallèle audit second panneau (12), ladite première section (521) comprend une partie femelle configurée pour être prévue dans ledit premier panneau (11) et ladite seconde section (522) comprend une partie mâle configurée pour être prévue sur ledit second panneau (12) et adaptée pour être intercouplée, ladite partie femelle de ladite première section (521) fournissant une extension d'accouplement (526) et ladite partie mâle de ladite seconde section (522) fournissant un élément élargi (524) adapté pour être engagé dans ladite extension d'accouplement (526) et s'étendant à partir de la tige filetée (25) pour rester en saillie depuis le second panneau (12) et être insérée dans l'extension d'accouplement (526).

2. Dispositif d'assemblage selon la revendication 1, **caractérisé en ce qu'**il comprend une douille (233) insérable dans ledit premier panneau (11) et contenant la première section du pion ou de la fiche, ladite extension d'accouplement (526), insérée sur ledit élément élargi (524) qui est extensible à partir d'un second panneau (12), est insérée dans la douille (233).

3. Dispositif d'assemblage selon une ou plusieurs des revendications précédentes, **caractérisé en ce qu'**un ressort de contraste (231) est associé audit élément cylindrique de ladite première section (521) pouvant être disposé sur ledit premier panneau (11).

4. Dispositif d'assemblage selon la revendication 2, **caractérisé en ce que** ledit élément cylindrique comporte, sur une partie de sa surface latérale, un plan fraisé (40) à fonction anti-rotation, ledit plan fraisé (40) abritant un bouchon (41) qui est inséré dans un trou latéral (42) de la douille (233) abritant ladite première section (521).

5. Dispositif d'assemblage selon la revendication 4, **caractérisé en ce qu'**un ressort de contraste (231) est agencé coaxialement par rapport audit élément cylindrique de ladite première section (521).
